Europäisches Patentamt

European Patent Office

Office européen des brevets

(19)

(11) Numéro de publication : **0 299 880 B1**

(12)

# FASCICULE DE BREVET EUROPEEN

(45) Date de publication du fascicule du brevet :
**03.04.91 Bulletin 91/14**

(51) Int. Cl.⁵ : **B25B 27/30, F16D 1/08**

(21) Numéro de dépôt : **88402003.3**

(22) Date de dépôt : **01.08.88**

(54) **Compresseur de ressorts hélicoïdaux.**

(30) Priorité : **07.08.87 FR 8711325**

(43) Date de publication de la demande :
**18.01.89 Bulletin 89/03**

(45) Mention de la délivrance du brevet :
**03.04.91 Bulletin 91/14**

(84) Etats contractants désignés :
**DE ES GB IT**

(56) Documents cités :
DE-A- 3 021 084
DE-C- 341 283
DE-U- 8 617 893

(56) Documents cités :
GB-A- 646 869
GB-A- 866 836
GB-A- 2 017 561
US-A- 3 520 527

(73) Titulaire : **FACOM, Société dite:**
**6 et 8 Rue Gustave Eiffel**
**F-91423 Morangis Cédex (FR)**

(72) Inventeur : **Dossier, Michel**
**12, rue Singer**
**F-75016 Paris (FR)**

(74) Mandataire : **de Morgues, Marie Emma et al**
**Cabinet Lavoix 2, place d'Estienne d'Orves**
**F-75441 Paris Cédex 09 (FR)**

## Description

La présente invention concerne un compresseur de ressorts hélicoïdaux destiné notamment à faciliter le montage et le démontage des ressorts de suspension de véhicules automobiles.

Elle concerne plus particulièrement les compresseurs de ressorts du type comportant deux mâchoires prévues pour y encastrer deux spires écartées du ressort à comprimer et montées en vis-à-vis, l'une fixe, l'autre coulissante, sur un tube de guidage fendu longitudinalement, et une vis de manoeuvre, placée dans l'axe du tube, permettant de commander les déplacements d'un coulisseau qui est relié à la mâchoire coulissante.

Les compresseurs de ce type doivent pouvoir être utilisés pour le montage ou le démontage de ressorts de forme et de dimensions variées, c'est-dire pouvoir recevoir des mâchoires interchangeables de dimensions échelonnées s'adaptant au diamètre des ressorts. Ils doivent en outre pouvoir résister à des efforts importants et notamment à des efforts axiaux tels que ceux que sont susceptibles d'exercer sur eux les spires d'un ressort de suspension de véhicule automobile.

Pour répondre à la première exigence et permettre d'adapter à volonté les mâchoires aux ressorts, ces dernières sont généralement constituées par des crampons ou griffes en forme de U ou en fer à cheval ayant une dimension qui correspond à celle de la spire que l'on veut y encastrer et munis de moyens démontables de liaison au coulisseau à travers une fente longitudinale du tube de guidage. Malheureusement l'assemblage entre la mâchoire et le coulisseau est sujet à se rompre sous l'effet de l'effort exercé sur la griffe.

On a donc proposé d'associer à un coulisseau placé à l'intérieur du tube de guidage un manchon entourant ce dernier et coulissant lui-même le long de ce tube. La griffe est dans ce cas montée de manière démontable sur le manchon lui-même. Les risques de rupture de l'assemblage entre la griffe et l'élément coulissant sont atténués mais subsistent. Par contre les frottements sont nettement accrus, du fait des frottements du manchon sur le tube, et peuvent même dans certain cas empêcher le coulissement du manchon notamment lorsque les griffes sont de grandes dimensions.

Par ailleurs, le US-A 3 520 527 décrit un étau dont les mâchoires, fixe et coulissante, comportent chacune des bras de préhension d'une seule pièce avec un corps alésé au diamètre d'un tube de guidage contenant une vis axiale d'entraînement de la mâchoire coulissante, par l'intermédiaire d'un doigt radial fileté. La liaison ainsi réalisée est complexe et relativement fragile.

La présente invention a pour but de remédier à ces inconvénients en fournissant un compresseur de ressorts qui permette de monter et de démonter les ressorts de tous diamètres avec une très grande securité, tout en étant réalisé de manière particulièrement simple et peu onéreuse.

Cette invention a en effet pour objet un compresseur de ressorts hélicoïdaux comportant deux mâchoires prévues pour y encastrer deux spires écartées d'un ressort à comprimer, montées en vis à vis, l'une fixe, l'autre coulissante, sur un tube de guidage fendu longitudinalement et comportant chacune d'un seul bloc deux bras formant griffes ou crampons et un corps alésé au diamètre du tube de guidage, et une vis de manoeuvre placée dans l'axe du tube et permettant de commander les déplacements d'un coulisseau qui est relié à la mâchoire coulissante, caractérisé en ce que le corps de la mâchoire coulissante est prolongé par une jupe filetée de coopération avec une bague de solidarisation avec le coulisseau, et comporte une rainure interne profilée qui a une section rectangulaire et une profondeur croissante en direction de la jupe filetée et coopère avec la saillie radiale de forme complémentaire du coulisseau.

Par ailleurs, le coulisseau forme un écrou de coopération avec la vis de manoeuvre prolongé axialement par un fourreau espacé de la vis et est en contact avec la surface interne du tube de guidage dans ses deux parties extrèmes.

Une telle mâchoire est facilement mise en place par simple emboîtement sur le tube de guidage et blocage sur le coulisseau par vissage de la bague sur la jupe filetée. Elle peut donc très rapidement être remplacée par une mâchoire analogue de dimensions différentes.

Par contre le fait que les griffes sont d'une seule pièce avec le corps alésé qui entoure le tube, auquel vient s'ajouter l'effet de la forme particulière de la rainure de la mâchoire et de la forme du coulisseau, permet à cet ensemble de résister à des efforts axiaux extrèmement importants, sans risque de blocage de l'élément coulissant.

Les appuis de la mâchoire coulissante sont en effet reportés et concentrés sur la partie du tube de guidage opposée à la fente en deux points situés de part et d'autre de la paroi de ce tube et éloignés axialement l'un de l'autre, ce qui supprime les risques d'arc-boutement et réduit les frottements s'opposant au coulissement du manchon.

La paroi extérieure du tube de guidage peut en outre comporter, à l'opposé de la fente longitudinale, une bande longitudinale de glissement en léger relief. Les frottements entre le tube de guidage et l'alésage de la mâchoire sont ainsi réduits, tandis que la zone d'appui de cet alésage sur le tube est limitée latéralement, ce qui évite les risques de coincement.

La description ci-dessous d'un mode de réalisation, donné à titre d'exemple non limitatif et représenté aux dessins annexés, fera d'ailleurs ressortir les avantages et caractéristiques de l'invention.

Sur les dessins :

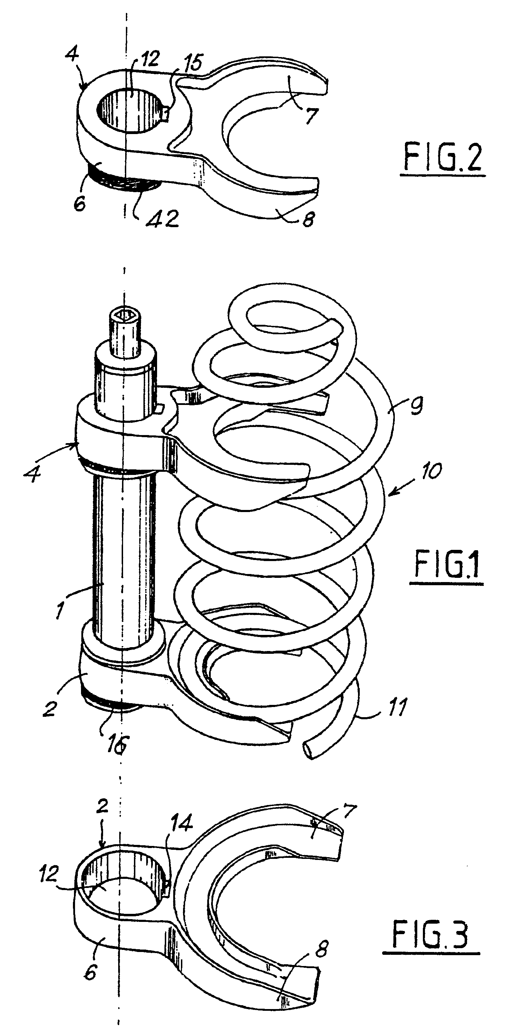

- la Fig. 1 est une vue en perspective d'un compresseur de ressorts selon l'invention,
- la Fig. 2 est une vue en perspective d'une mâchoire coulissante pour le compresseur de la Fig. 1,
- la Fig. 3 est une vue en perspective d'une mâchoire fixe pour le compresseur de la Fig. 1,
- la Fig. 4 est une vue en coupe axiale du compresseur de la Fig.1,
- la Fig. 5 est une vue éclatée du compresseur de ressorts,
- la Fig. 6 est une vue en élévation du tube de guidage,
- la Fig. 7 est une vue en coupe suivant la ligne 7-7 de la Fig. 6,
- la Fig. 8 est une vue en élévation d'une variante de réalisation du tube de guidage.

Le compresseur de ressort hélicoïdaux selon l'invention comporte un tube de guidage cylindrique 1 qui porte d'une part une mâchoire fixe 2 montée à l'une des ses extrémités et d'autre part une mâchoire coulissante 4 susceptible de se déplacer par rapport à la mâchoire fixe le long du tube 1.

Chacune de ces mâchoires comporte un corps 6 d'où partent deux bras 7 et 8 formant griffes ou crampons et ayant des forme et dimension qui correspondent à celles de l'une des spires 9 ou 11 du ressort 10 à comprimer. Le corps 6 est percé d'un alésage 12 dont le diamètre est légèrement supérieur à celui de la surface extérieure du tube de guidage 1 et qui comporte une rainure axiale 14, 15.

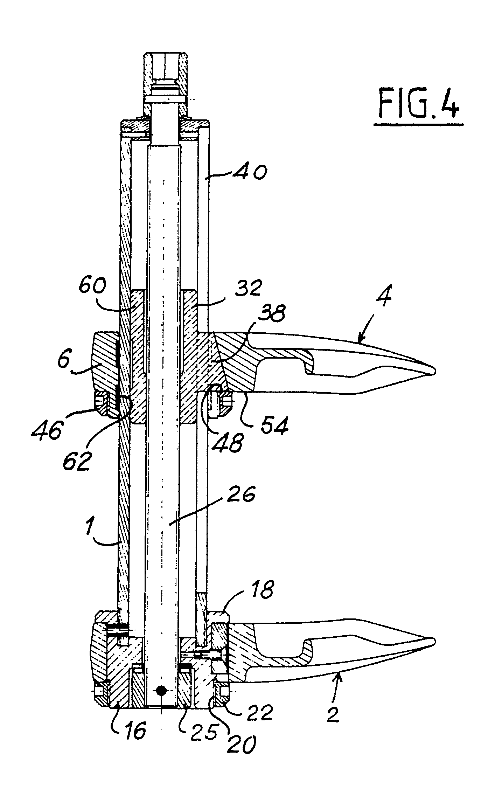

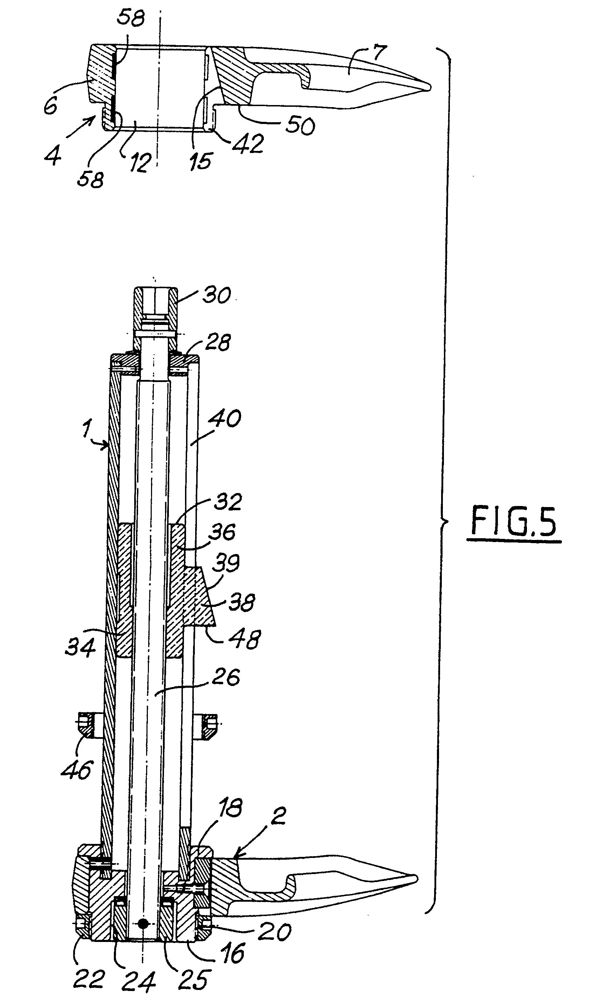

La mâchoire 2 est fixée à l'extrémité du tube de guidage 1 par l'intermédiaire d'un embout 16 qui est vissé sur ce tube (Fig. 4 et 5) et forme autour de lui une collerette 18 tandis qu'il comporte à son extrémité opposée un filetage 20. La mâchoire fixe 2 est enfilée sur cet embout 16 et immobilisée sur lui au moyen d'une bague filetée intérieurement 22 qui est vissée sur le filetage 20 et serre la mâchoire 2 contre la collerette.

L'embout 16 est en outre percé d'un alésage étagé 24 le traversant axialement dans lequel est montée rotative la tête 25 d'une vis de manoeuvre 26 qui se prolonge axialement sur toute la longueur du tube de guidage et traverse un plateau de fermeture 28 dont le diamètre est au plus égal au diamètre extérieur du tube 1 qu'il ferme donc au diamètre de l'alésage 12 de la mâchoire. A l'extérieur du tube 1, la vis reçoit un embout polygonal 30 permettant de la relier à un dispositif de commande de son déplacement en rotation. Ce dispositif de commande pouvant être de tout type approprié et ne faisant pas partie de l'invention ne sera pas décrit ici.

Sur la vis de manoeuvre 26 est monté un coulisseau 32 qui forme un écrou 34 vissé sur la vis 26 et prolongé par un fourreau 36 entourant cette vis mais sans contact avec elle. Dans ses deux parties extrêmes le coulisseau 32 est en contact avec la surface interne du tube 1 tandis que dans sa partie centrale il porte un doigt radial 38 dont la surface externe 39 est inclinée par rapport à l'axe du coulisseau et de la vis de telle sorte que sa section croît en direction de l'écrou et de l'extrémité du tube portant la mâchoire fixe 2. Le doigt radial 38 traverse une fente longitudinale 40 du tube 1 et fait ainsi saillie à l'extérieur de ce tube.

Le corps 6 de la mâchoire coulissante 4 est, lui, prolongé à son extrémité correspondant à la face de préhension des griffes 7 et 8 par une jupe cylindrique 42 filetée extérieurement et coaxiale à l'alésage 12. En outre, ce corps 6 comporte une rainure axiale 15 qui est profilée de façon à avoir une profondeur qui croît en direction de cette jupe 42 et une forme complémentaire de celle du doigt 38 qui est sensiblement en forme de coin. De préférence elle a une section rectangulaire et une face inclinée par rapport à l'axe de l'alésage 12.

La mâchoire ainsi constituée peut facilement être emboîtée sur le tube de guidage 1, par exemple descendue le long de ce tube si l'on considère la Fig. 5, à partir de son extrémité 28 de sorte que la rainure axiale 15 vient s'emboîter sur le doigt 38 du coulisseau et ainsi bloquer radialement la mâchoire 4 puis arrêter son déplacement axial. Une bague filetée intérieurement 46, enfilée préalablement sur le tube de guidage 1 entre la mâchoire fixe 2 et le coulisseau 32, est alors vissée sur la jupe 42 jusqu'au moment où elle bute à la fois contre la face inférieure 48 du doigt radial 38 du coulisseau et contre la face inférieure 50 de la mâchoire 4 (Fig. 4). Les deux organes sont ainsi étroitement bloqués l'un par rapport à l'autre et rendus solidaires à la fois en rotation et en translation.

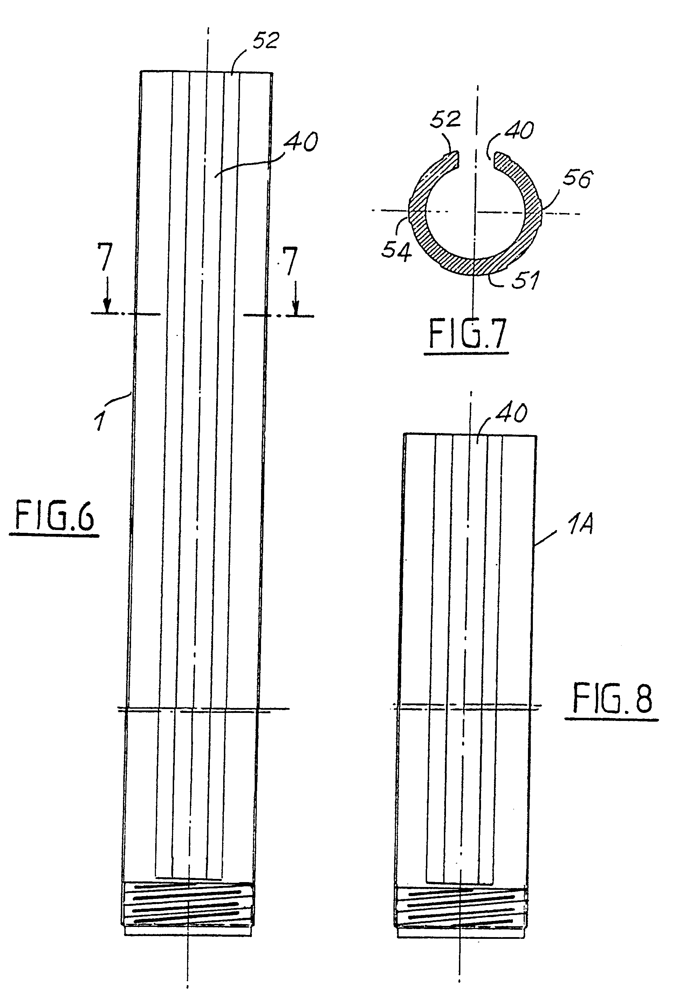

De préférence comme le montrent les Figs 6, 7 et 8 le tube de guidage 1 qui a une section circulaire comporte sur sa surface externe au moins une bande longidunale de glissement en léger relief 51, diamétralement opposée à la fente 40, et de préférence également des bandes en relief plus étroites 52 de part et d'autre de cette fente. D'autres bandes longitudinales en relief 54 et 56 peuvent également être prévues en des emplacements intermédiaires entre la bande 51 et chacune des bandes 52, par exemple aux extrémités d'un diamètre perpendiculaire au plan médian de la fente 40 et de la bande 51. L'appui de la mâchoire 4 sur le tube est alors limité à la surface de ces bandes, ce qui réduit le frottement entre cette mâchoire et le tube et facilite le déplacement relatif de ces deux organes en évitant tout effet de coin.

Le glissement de la mâchoire 4 et/ou du coulisseau peut d'ailleurs être encore facilité en appliquant sur les parois extérieure et/ou intérieure du tube de guidage, un traitement de surface anti-friction. Un tel traitement peut également être appliqué sur la surface extérieure du coulisseau et/ou sur la surface interne de l'alésage 12 de la mâchoire coulissante 4.

Par ailleurs, des bagues ou patins anti-friction 58 peuvent être montés à l'intérieur du corps de la mâchoire 4 dans la paroi de l'alésage 12, ce qui facilite encore le glissement de cette mâchoire.

Bien entendu le tube de guidage 1 peut avoir des longueurs différentes selon les utilisations ainsi que représenté en 1 et 1A sur les Figs. 6 et 8. La section et le diamètre de ce tube restent toutefois de préférence constants de façon qu'il puisse recevoir l'une ou l'autre de diverses mâchoires ayant toutes un corps 6 percé d'un alésage 12 de même dimension bien que leur bras 7 et 8 aient des formes et/ou dimensions variées.

Lorsque les mâchoires fixe 2 et mobile 4 sont mises en contact avec deux spires écartées 9 et 11 du ressort hélicoïdal 10, et rapprochées l'une de l'autre en vue de la compression de ce ressort, la mâchoire coulissante 4 étant rigoureusement solidaire du coulisseau grâce à son appui sur la saillie radiale 38, les appuis de la mâchoire coulissante 4 sur le tube de guidage 3 sont reportés et concentrés sur la partie arrière du tube de guidage 1 d'une part au point 60 de sa surface interne contre lequel appuie la partie supérieure du fourreau 36 et d'autre part en 62 sur sa face externe au point de contact de cette dernière et de la jupe filetée 42. L'écartement axial entre les zones d'appui 60 et 62 étant beaucoup plus grand que leur écartement radial, qui est limité pratiquement à l'épaisseur du tube de guidage 1, les risques d'arcboutement sont supprimés, tandis que les efforts radiaux supportés par le tube de guidage, et par conséquent la résistance des frottements s'opposant au coulissement de la mâchoire, sont réduits à un minimum.

En outre, la zone d'appui 62 est limitée à la bande longitudinale de glissement en relief 51 et ne peut s'étendre latéralement ce qui pourrait provoquer un effet de coincement.

Il est bien évident que la ou les bandes de glissement pourraient être formées, si désiré, sur la paroi de l'alésage 12 de la mâchoire au lieu de l'être sur le tube.

Le compresseur de ressorts hélicoïdaux ainsi réalisé permet donc d'effectuer le montage et le démontage des ressorts et notamment des ressorts de suspension des véhicules automobiles, quelles que soient la forme et les dimensions de ces ressorts, et cela sans crainte de rupture de l'assemblage des mâchoires en raison de l'importance des frottements sur le tube de guidage.

Le démontage et le remplacement des mâchoires 2 et 4 par d'autres mâchoires de dimensions et de formes différentes s'effectuent de manière extrêmement simple puisqu'il suffit de dévisser les bagues filetées 22 et 46 et de dégager la mâchoire à remplacer puis de réintroduire d'autres mâchoires de même type et de remettre en place les bagues filetées 22, 46.

On obtient donc avec un nombre réduit de pièces faciles à fabriquer et aisées à assembler un compresseur de ressorts particulièrement sûr et efficace.

## Revendications

1. Compresseur de ressorts hélicoïdaux comportant deux mâchoires (2, 4) prévues pour y encastrer deux spires écartées d'un ressort à comprimer (10), montées en vis à vis, l'une fixe, l'autre coulissante, sur un tube de guidage (1) fendu longitudinalement et comportant chacune d'un seul bloc deux bras (7, 8) formant griffes ou crampons et un corps (6) alésé au diamètre du tube de guidage (1), et une vis de manoeuvre (26) placée dans l'axe du tube et permettant de commander les déplacements d'un coulisseau (32) qui est relié à la mâchoire coulissante (4), caractérisé en ce que le corps de la mâchoire coulissante (4) est prolongée par une jupe filetée (42) de coopération avec une bague (46) de solidarisation avec le coulisseau (32), et comporte une rainure interne profilée (15) qui a une section rectangulaire et une profondeur croissante en direction de la jupe filetée (42) et coopère avec une saillie radiale (38) de forme complémentaire du coulisseau.

2. Compresseur de ressorts suivant la revendication 1, caractérisé en ce que le coulisseau (32) forme un écrou (34) de coopération avec la vis de manoeuvre (26) prolongé par un fourreau (36) et est en contact avec la surface interne du tube de guidage dans ses deux parties extrêmes, de sorte qu'en utilisation le manchon étant rendu solidaire de la saillie radiale, les efforts radiaux induits par l'effort axial de compression du ressort sont reportés d'une part sur la portion du tube de guidage opposée à la fente en son point de contact (60) avec le fourreau (36) et d'autre part en son point de contact (62) avec la jupe de la mâchoire coulissante (4).

3. Compresseur suivant la revendication 2, caractérisé en ce que le fourreau (36) du coulisseau entoure la tige de manoeuvre (26) sans contact avec elle.

4. Compresseur suivant l'une des revendications 1 à 3, caractérisé en ce que le tube de guidage (1), qui a une section sensiblement circulaire, comporte sur sa paroi extérieure au moins une bande longitudinale de glissement (51) en léger relief, diamétralement opposée à sa fente longitudinale (40).

5. Compresseur suivant l'une des revendications 1 à 4, caractérisé en ce que le tube de guidage (1) comporte sur sa paroi extérieure plusieurs bandes longitudinales en relief (51, 52, 54, 56) sur sa périphérie.

6. Compresseur de ressorts suivant la revendication 5, caractérisé en ce que le tube de guidage (1) comporte des bandes longitudinales de glissement en relief (51, 52, 54, 56) sur chacun des côtés de la fente (40), à l'opposé de cette fente et en des emplacements intermédaires.

7. Compresseur de ressorts suivant l'une des revendications précédentes, caractérisé en ce qu'un traitement de surface anti-friction est appliqué sur les parois intérieure et/ou extérieure du tube de guidage et/ou de l'alésage (12) de la mâchoire coulissante (4).

8. Compresseur de ressorts suivant l'une des revendications précédentes, caractérisé en ce que l'alésage (12) de la mâchoire coulissante (4) est garni de bagues ou patins anti-friction (58) facilitant son glissement le long du tube de guidage (1, 1A).

## Claims

1. Coil spring compressor comprising two jaws (2, 4) provided for inserting therein two spread-apart coils of a spring (10) to be compressed and mounted in facing relationship, one jaw being fixed, the other being slideable, on a longitudinally split guide tube (1) and each comprising in a single piece two arms (7, 8) forming claws or clamps and a body (6) bored to the diameter of the guide tube (1), and an actuating screw (26) placed on the axis of the tube and making it possible to control the displacements of a slide (32) which is connected to the slideable jaw (4), characterised in that the body of the slideable jaw (4) is extended by a screw-threaded skirt (42) cooperating with a ring (46) for connection to the slide (32), and comprises a profiled inner groove (15) which has a rectangular section and a depth which increases in the direction of the screw-threaded skirt (42) and cooperates with a radial projection (38) of complementary shape of the slide.

2. Spring compressor according to Claim 1, characterised in that the slide (32) forms a nut (34) cooperating with the actuating screw (26) extended by a sleeve (36) and is in contact with the inner surface of the guide tube in its two end portions, so that, in use, as the sleeve is connected to the radial projection, the radial forces induced by the axial force of compression of the spring are transferred on the one hand to the portion of the guide tube opposed to the slot at its point of contact (60) with the sleeve (36), and on the other hand at its point of contact (62) with the skirt of the slideable jaw (4).

3. Compressor according to Claim 2, characterised in that the sleeve (36) of the slide surrounds the actuating rod (26) without contact with the latter.

4. Compressor according to one of Claims 1 to 3, characterised in that the guide tube (1), which has a substantially circular cross-section, comprises on its outer wall at least one longitudinal projecting sliding strip (51), diametrically opposed to its longitudinal slot (40).

5. Compressor according to one of Claims 1 to 4, characterised in that the guide tube (1) comprises on its outer wall a plurality of longitudinal projecting strips (51, 52, 54, 56) on its periphery.

6. Spring compressor according to Claim 5, characterised in that the guide tube (1) comprises longitudinal projecting sliding strips (51, 52, 54, 56) on each of the sides of the slot (40), opposite to said slot and at intermediate locations.

7. Spring compressor according to one of the preceding Claims, characterised in that an anti-friction surface treatment is applied to the inner and/or outer walls of the guide tube and/or of the bore (12) of the slideable jaw (4).

8. Spring compressor according to one of the preceding Claims, characterised in that the bore (12) of the slideable jaw (4) is provided with anti-friction rings or shoes (58) facilitating its sliding along the guide tube (1, 1A).

## Ansprüche

1. Federspanngerät mit zwei Klemmbacken (2, 4) zum Einspannen von zwei beabstandeten Windungen einer zu spannenden Feder (10), wobei die eine ortsfest und die andere verschiebbar gegenüberliegend auf einem der Länge nach geschlitzten Führungsrohr (1) angeordnet ist, und jede Klemmbacke (2, 4) zwei von einem Stück ausgehende Arme (7, 8) besitzt, welche Halte- oder Aufnahmevorrichtungen bilden, und ein Rumpfstück (6) mit einer Bohrung in der Größe des Durchmessers des Führungsrohres (1) und eine Spindel (26), welche in der Achse des Führungsrohres angeordnet ist und das Verschieben eines mit der verschiebbaren Klemmbacke (4) verbundenen verschiebbaren Teils (32) ermöglicht, dadurch gekennzeichnet, daß das Rumpfstück der verschiebbaren Klemmbacke (4) einen mit einem Gewinde versehenen Fortsatz (42) besitzt, welcher mit einem Ring (46), der an dem verschiebbaren Teil (32) angeordnet ist, zusammengefügt werden kann, und daß das Rumpfstück eine profilierte Innennut (15) besitzt, welche einen rechteckigen Querschnitt aufweist und deren Breite zu dem mit einem Gewinde versehenen Fortsatz (42) hin zunimmt und in welche ein am verschiebbaren Teil angeordneter radialer Vorsprung (38) eingreift.

2. Federspanngerät nach Anspruch 1, dadurch gekennzeichnet, daß das verschiebbare Teil (32) eine Mutter (34) bildet, welche mit der Spindel (26) zusammenwirkt und durch eine Hülse (36) verlängert ist und daß das verschiebbare Teil an seinen beiden Endbereichen mit der Innenfläche des Führungsrohres in Berührung steht, so daß bei Betätigung der mit dem radialen Vorsprung verbunden gewordenen Klemmbacke die von der Axialkraft der Federspannung induzierten Radialkräfte einerseits auf den Teil des Führungsrohres übertragen werden, der dem Spalt an der Berührungsstelle (60) mit der Hülse (36) gegenüberliegt und andererseits auf die Berührungsstelle (62) mit dem Fortsatz der verschiebbaren Klemmbacke (4).

3. Federspanngerät nach Anspruch 2, dadurch gekennzeichnet, daß die Hülse (36) des verschiebbaren Elementes die Spindel (26) umgibt, ohne sie zu berühren.

4. Federspanngerät nach einem der Ansprüche 1-3, dadurch gekennzeichnet, daß das Führungsrohr (1), das einen kreisförmigen querschnitt aufweist, mindestens einen leicht erhabenen Längsstreifen (51) an seiner Außenwand aufweist, welcher dem Längsschlitz (40) diametral gegenüberliegt.

5. Federspanngerät nach einem der Ansprüche 1-4, dadurch gekennzeichnet, daß das Führungsrohr (1) am Umfang seiner Außenwand mehrere erhabene Längsstreifen (51, 52, 54, 56) aufweist.

6. Federspanngerät nach Anspruch 5, dadurch gekennzeichnet, daß das Führungsrohr (1) erhabene Längsstreifen (51, 52, 54, 56) auf der Seite des Schlitzes (40), gegenüber davon und an dazwischenliegenden Stellen aufweist.

7. Federspanngerät nach einem der vorhergehenden Ansprüche, dadurch gekennzeichnet, daß die Innen- und/oder Außenwände des Führungsrohres und/oder der Bohrung (12) der verschiebbaren Klemmbacke (4) antifriktions-behandelt werden.

8. Federspanngerät nach einem der vorhergehenden Ansprüche, dadurch gekennzeichnet, daß die Bohrung (12) der verschiebbaren Klemmbacke (4) mit Antifriktions-Ringen oder -Vorsprüngen (58) versehen ist, die ein leichteres Gleiten der Klemmbacke entlang des Führungsrohres (1, 1A) ermöglichen.

FIG.2

FIG.1

FIG.3

FIG.4

FIG.5

FIG.6

FIG.7

FIG.8